# EUROPEAN PATENT APPLICATION

(11) **EP 0 659 462 A1**
(43) Date of publication of application: **28.06.1995**
(21) Application number: 94203404.2
(22) Date of filing: 23.11.1994
(51) Int. Cl.: B01D 50/00

(54) **A system for hot dedusting flue gas from incinerators and thermal stations**

(30) Priority: 22.12.1993 IT MI932700
(71) Applicant: FINMECCANICA S.p.A. AZIENDA ANSALDO, I-16128 Genova (IT)
(72) Inventor: Drozdz, Matgorzata, I-16159 Genova (IT); Repetto, Francesco, I-16016 Cogoleto (Genova) (IT)
(74) Representative: Falcetti, Carlo

(57) **Abstract**

A hot dedusting system for flue gases of incinerators and thermal plants comprising an axial cyclone (2,10,12) swept through by the full flow of hot flue gas, a parting loop for splitting the flue gas flow exiting the axial cyclone into a primary flow at a low dust concentration and high flow rate and a secondary flow at a high dust concentration and low flow rate (about 10% of the overall flow rate) and a second filtering stage (3,19,45) for the secondary flow, hot primary and secondary flows being admitted into a regenerative heat exchanger (5).

## Description

The present invention relates to a system for cleaning high temperature flue gas from incinerators and thermal plants of small granulometry dust, which enables recovery of the enthalpy of the processed gas and affords improved efficiency for the heat regenerators.

The cleaning of flue gas from an incinerator of solid urban waste at a high temperature and of flue gas from a thermal plant involves technologies yet not fully developed, and wide spectrum problems.

The flue gas contains acid substances in a molecular state and solid combustion residue particles which cannot be released to the ambience because of their polluting and toxic effects, and which have harmful effects even on the thermal or incinerating plant itself.

The damping of the flue gas acidity is performed downstream of the plant essentially through scrubbing towers (or scrubbers) arranged directly upstream of the flue gas exhaust chimney.

The damping of solid particles entrained with the flue gas is performed in several stages.

A first filtration is obtained by subjecting the flue gas to sharp path variations, which tends to precipitate the particulate of larger size (>50 µ) into a collecting chamber.

A subsequent filtration is obtained by using cyclone strainers generally arranged downstream from the plant and followed by electrostatic precipitators which complete the filtering process that has originated in the cyclone by removing from the flue gas small size particles (smaller than about 10 µ) on which the centrifugal effect produced by the cyclone is ineffective for the purpose of filtration.

Any residual particulate from the flue gas is held back in the liquid of the scrubbers.

Electrostatic precipitators must be placed, of necessity, downstream of the plant in an area where the flue gas has a comparatively low temperature in the 200°C range, and the cyclone strainers are preferably placed directly upstream.

Their location at a section at a higher temperature of the flue gas path, while being feasible, would require for the cyclone a much more effective and expensive thermal insulation and would involve considerable heat dissipation, since the temperature of the flue gas exiting the combustion chamber is on the order of 900°C and may be even higher in certain thermal plants.

It will be apparent, therefore, that all the heat exchanger elements in the plant located in the path of hot flue gas become swept by gas loaded with dust which, as it progressively settles and builds up on the same, causes a considerable reduction of the exchanger thermal conductivity and, hence, of their efficiency.

Restoring the exchangers to efficient operation involves frequent maintenance or the adoption of expensive cleaning arrangements using steam or compressed air blasts which are to act all over the exchanger surfaces and whose operation at all events lowers the overall performance of the plant.

In addition, cyclone strainers, sized for the full flow rate of flue gas, are bulky and of limited efficiency.

Their efficiency can be improved and their bulk reduced by increasing the velocity of the gas therethrough, but this involves a considerable increase in head loss across the cleaner and the availability of exhausting systems with proportionally higher energy consumption and cost.

These limitations are obviated by the flue gas dedusting system that forms the subject-matter of the present invention, which enables hot dedusting, while the flue gas temperature is still in the 800° to 900°C range, that is upstream of the heat exchanger elements, with minimal energy consumption and so high an efficiency as to make the use of the expensive electrostatic filters (and to some extent of scrubbers as well) unnecessary and to reduce the exchanger maintenance or cleaning requirements to a minimum.

These results are achieved by a filtration system consisting of an axial cyclone equipped with a vortex generator or swirler swept through by the full flow rate of the flue gas and provided at the outlet of a flow throttling loop which splits the flow into two parts, of which the first, at a very low concentration of dust, consists of a flue gas flow rate equal to about 90% of the total, and the second of which, amounting to about 10% of the total and being at a high dust concentration, is delivered to a second filtering stage of reduced size and high efficiency, capable of operating at a high temperature.

Both the first flue gas flow rate exiting the axial cyclone and the second flue gas flow rate exiting the second filtering stage, thus cleaned, can be supplied to the heat exchangers, fully contributing to the recovery of energy with a minimal formation of deposits over the exchanger elements.

The cooled flue gas can then be cleaned conventionally through a scrubber.

According to a further aspect of the present invention, the second filtering stage comprises one or more filter candles of ceramics capable of operating at a high temperature.

According to another aspect of the present invention, to further improve the efficiency and service life of the second stage, the ceramics candle(s) is(are) integrated to a reverse flow cyclone of the axial type with swirler or tangential inlet, and act as a third filtering stage (the candles) and a second filtering stage (the cyclone), respectively.

The features and advantages of the present invention will become more clearly apparent from the following description of a preferred embodiment and the accompanying drawings, where:
Figure 1 is a block diagram of the dedusting system that forms the subject-matter of the present invention, as installed in a thermal plant;
Figure 2 shows in section an axial cyclone, the constitutive element of a first filtering stage of the system in Figure 1;
Figure 3 shows in section a filter candle element of ceramics, the costitutive element in a preferred embodiment of a second filtering stage of the system in Figure 1;
Figure 4 is a part-sectional perspective view of a ceramics filter element integrated to a reverse flow cyclone with tangential inlet, forming a second cyclone filtering stage and a third filtering stage with ceramics candle;
Figure 5 shows in section a ceramics filter element integrated to a reverse-flow axial cyclone forming a second filtering stage with reverse-flow axial cyclone and a third filtering stage with ceramics candle.

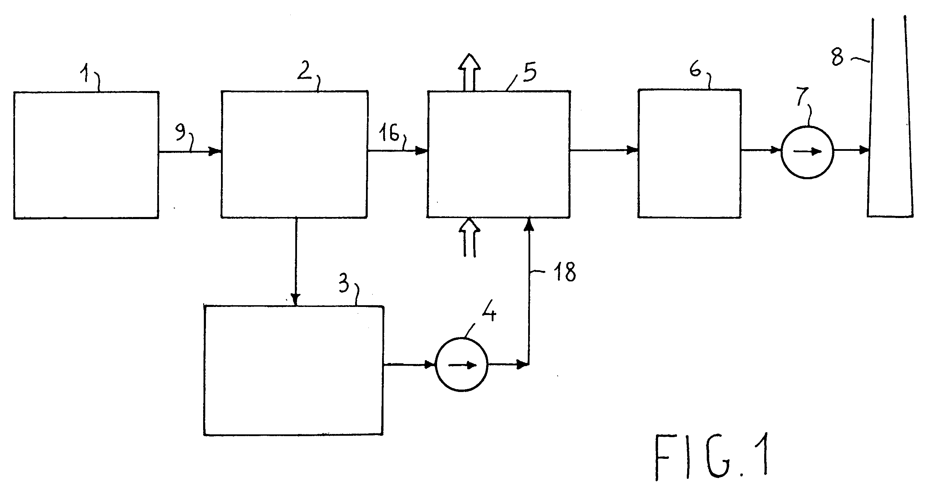

With reference to Figure 1, a thermal or incinerator plant comprises essentially a combustion chamber 1 wherein, from the reaction of combustion air with a fuel, flue gas is generated at a high temperature, a regenerative boiler 5 wherein, through heat exchangers, the hot flue gas delivers its heat to a thermal transfer fluid (usually water brought to a vapor state and possibly combustion air which is pre-heated), a flue gas cleaning system 6 comprising, in cascade, cyclones, electrostatic precipitators, scrubbing towers, and ultimately a chimney 8 for releasing the flue gas to the atmosphere.

The draught induced by the chimney 8 is generally supplemented by exhausting means 7, e.g. fans.

According to the invention, the flue gas cleaning system 6 is replaced wholly or in part by a cleaning system which comprises a first filtering stage 2 consisting of an axial cyclone with swirler and a second filtering stage 3.

The axial cyclone 2 is supplied the full flow rate 9 of the flue gas exiting the combustion chamber 1 (or outflowing from a first regenerative boiler, not shown, when the temperature of the flue gas is particularly high above 900°C).

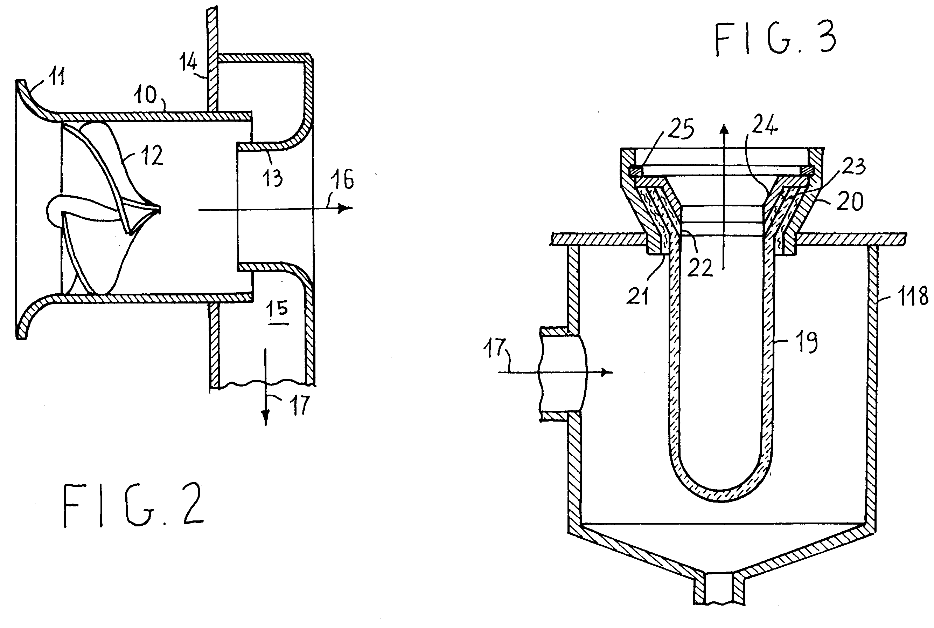

Figure 2 shows in section the structure of the axial cyclone 2.

This consists of a cyclindrical pipe section 10 with an inlet nozzle 11, on the inside whereof a stationary helical vane swirler or vortex generator 12 is accommodated.

At a suitable distance from the swirler 12 and coaxially with the cylindrical pipe 10, a pipe or ring 13 is inserted of a diameter suitably smaller than that of the pipe 10, and suitably shaped to form a diverging nozzle which connects to a partition 14, thereby forming a chamber 15 for confining a secondary flow.

The swirler 12, by means of its vanes, imparts a rotary motion component to the flue gas incoming to the nozzle 11 in the axial direction.

It is to this rotary component, whose value closely approximates that of the axial velocity of the incoming flue gas, that the centrifugal effect is owed which confines the particles within a peripheral layer of the flue gas flow which is directed to the pipe 13.

The pipe 13 is effective to split the flow of the flue gas into two parts, the first part, corresponding to the center section of the flow, flows into the pipe 13, continuing in its axial movement, indicated by the arrow 16, the second part, corresponding to the annular flow section included between the pipe 13 and the pipe 10, is caught by the pipe 13 and conveyed into the confining chamber 15 whence it is extracted as secondary flow represented by the arrow 17.

The pipes 10 and 13 are suitably sized such that the main flow of flue gas, represented by the arrow 16, corresponds to about 90% of the overall flow of flue gas and the secondary flow corresponds to about 10% of the overall flow of flue gas.

For the same head loss as a cyclone of conventional design having a tangential inlet, the axial cyclone has a much smaller bulk and much higher efficiency.

In fact, it is known that the head losses of a gaseous flow are to a good extent proportional to V², where V is the flow velocity, and that the centrifugal acceleration is V²/R where R is the radius of curvature imparted to the flow, that is the radius of the cyclone for the most peripheral flow.

In a tangential inlet cyclone, R is of necessity much greater than the equivalent radius of the flow section (which may be non-circular, e.g. square or rectangular).

On the contrary, in the axial cyclone the radius of curvature imparted to the flow is coincident with the radius of the incoming flow section and therefore, for the same tangential velocity to flow rate, is much smaller and produces a much greater centrifugal effect.

Only particles of minimal size, less than 10 µ, will be affected to a limited extent by the centrifugal effect and remain to some extent dispersed through the main flow 16.

However, a fair proportion of these, together with the particles of larger diameter than 10 µ, is confined within the secondary flow 17 and entrained thereby.

In relation to its reduced bulk, the axial cyclone can be effectively insulated so as to render the dissipation of heat negligible.

Thus, the outgoing primary and secondary flows retain substantially the same heat content as the incoming flow.

The main flow 16 is then delivered, as indicated in Figure 1, to a regenerative heat exchanger 5, whose efficiency is not impaired, except at long terms, by the limited content of solid particulate of the flue gas.

The secondary flow 17, at a high concentration of dust and reduced flow rate (10% of the overall flow), is instead conveyed to filtering devices 3, which may be a conventional tangential inlet cyclone type, sized for a flow rate of 10% of the overall flue gas flow.

They are, therefore, much less bulky and very high flow velocities can be imparted therein to achieve improved dedusting efficiency, for a limited increase in the power required by exhausting members 4, to compensate for the increased head losses.

The secondary flow, thus filtered through the second filtering stage 3, can also be introduced, as indicated by the arrow 18, into the exchanger 5, so as to recover its heat content.

The flue gas exiting the exchanger 5 may then be introduced into a final cleaner 6 consisting of a simple scrubber, with no need for electrostatic filters and thence, through exhausting systems 7 and a chimney 8, be released to the atmosphere.

In the extreme, in plants which use fuels with a low acid content, or include systems for hot damping the acidity of the flue gas, the dedusting produced by the two filtering stages 2 and 3 can make the use of final scrubbers unnecessary, the residual dust content of the flue gas being below admissible limits for its dissipation through the atmosphere.

In particular this can be made possible by the use, instead of conventional filtering systems for the second filtering stage 3 (Figure 1), of high-efficiency filtering systems capable of operating at a high temperature, which will now be described with reference to Figures 3, 4, 5.

In Figure 3, the secondary flow 17 is introduced into a suitably insulated chamber 118.

Accommodated within the chamber 118 is at least one ceramics candle 19 (in practice a bank of candles) sintered to a suitable degree of porosity.

The candle, in the form of a hollow cylindrical element closed at one end and provided with a conical attachment spigot 23 at the other end, is fixed in a conical housing socket 20 with which a wall of the chamber 118 is equipped.

To compensate for differential thermal expansions between the candle and the conical socket 20, ceramic felt gaskets 21, 22 are respectively provided between the socket 20 and the conical spigot 23 and between the conical spigot 23 and a clamping flange 24 provided with a sealing counter-socket.

Clamping of the flange 24 to the socket 20 is ensured by a snap ring 25 fitted in a groove on the bowl 20 or some equivalent means.

The secondary flow 17, in entering the chamber 118, is dispersed through the chamber, losing speed, so that a large proportion of the entrained solid particles will settle at the bottom of the chamber whence it can be withdrawn periodically by opening dumping doors or using an auger with continued spill of a negligible flow rate of flue gas.

Due to the effect of a suitable pressure differential being maintained between the interior of the chamber 118 and the exterior of the candle (by the exhausting members 4 of Figure 1), the flue gas contained in the chamber 118 is then drawn out through the candle 19 which filters off the residual particulate, so that cleaned hot flue gas is extracted from the candle and conveyed to the heat exchangers.

The periodical cleaning of the candle or the candles is easily carried out using blasts of compressed air blown in countercurrent for a short time into the candle, which prevent it from clogging up without decreasing its temperature.

Candles of this type are capable of operating at high temeperatures of up to 850°C, and in the extreme even higher.

The limitation is essentially dictated more by the risk that the particulate in the flue gas may melt down to form clogging vitreous clinker than by the characteristics of the ceramics material.

According to a further aspect of the present invention, the efficiency of the second filtering stage 3 of the secondary flow is improved by the provision of a filtering system wherein at least one filter candle is housed within a reverse flow cyclone.

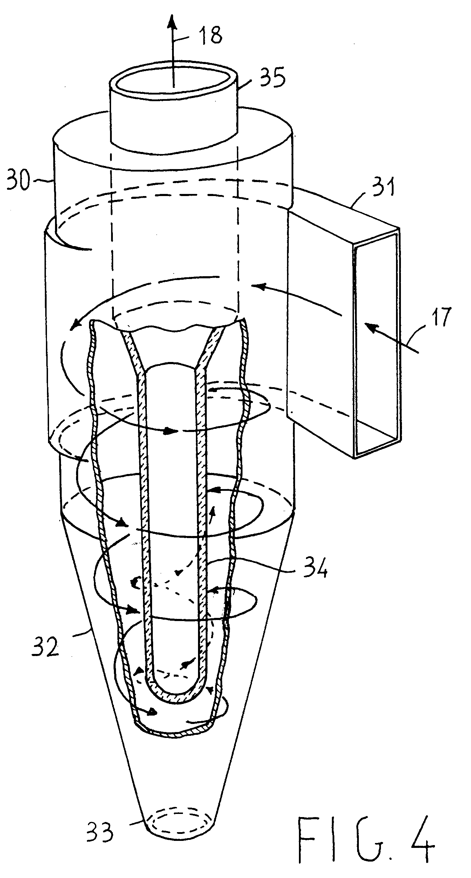

With reference to Figure 4, a reverse flow cyclone with tangential inlet essentially consists of a cylindrical chamber 30 wherein an inlet mouth 31 connected to the sidewall of the chamber by a spiralling surface admits the secondary flow 17 to be filtered.

The cylindrical chamber 30 extends downwardly into a frusto-conical or funnel-shaped chamber 32 terminated with a well 33 openable periodically to dump out the solid particulate (or here too by continual dumping by spillage of a negligible flow rate of flue gas).

Housed in axial position within the chambers 30, 32 is a ceramics candle 34 connected to an axial outflow pipe 35.

The secondary flow 17 introduced into the chamber 30 acquires a helical swirling motion which propagates, in contact with the cyclone walls, as far as the well 33 to deposit, over the walls of the cyclone, the solid particles which, by losing speed, settle gradually into the well 33.

The swirling flow thus cleaned tends then to rise back in the innermost volume of the chamber and sweep the candle 34, through which it is drawn and conveyed into the outflow pipe 35.

The filtering of the secondary flow takes place, therefore, in two stages, one of which consists of the reverse flow cyclone, the other stage consisting of the candle 34 which serves the single function of holding back the residual particulate, of finer size, uncaught by the previous stage.

Since the secondary flow only represents a minimal fraction (10%) of the overall flue gas flow and the candle 34 is accommodated inside the cyclone, the combined cyclone-candle assembly can be implemented in a compact and easily insulatable form, can be supplied a high-velocity flow and, therefore, can afford a high filtering effectiveness without requiring an exorbitant amount of power for supplying the flow and without causing dissipation of the flue gas heat content.

The same result can be obtained, with comparable effectiveness, by using a swirler cyclone connected to a frusto-conical chamber which produces a reverse flow.

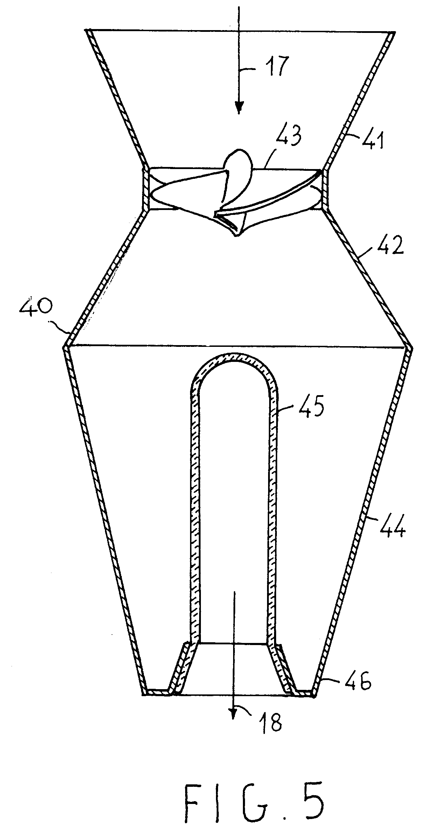

As shown in Figure 5 an axial cyclone 40 is preferably implemented as a venturi with a converging nozzle 41 and a diverging nozzle 42.

Located at the minimum section of the tube is a swirler 43 which imparts the incoming flow 17 with a rotary component having a high velocity approximately equal to the axial velocity of the flow at the minimum section.

The diverging outlet nozzle 42 of the axial cyclone is connected to a frusto-conical chamber 44, entirely similar to that already considered with reference to Figure 4 and terminated with a toroidal dust collecting vat 46.

Through the toroidal vat 46, a ceramics candle 45 of the type described above is inserted and housed in the chamber 44.

Here again, the swirl induced by the swirler 43 causes centrifugation of the solid particulate on the walls of the chamber 44 and the return swirl, now cleaned to a large extent, is again drawn up the candle 45 and further filtered thereby.

The outgoing flow 18 from the candle may then be conveyed to a heat exchanger.

It will therefore be apparent that the different implementative solutions described afford the following advantages:
- High filtering efficiency. The filtering process is carried out on the hot flue gas in two or three stages.

The first is to catch particulate of larger size and a fair amount of that having a smaller size than 10 µ for the full flow rate, the second is to filter a modest fraction of the full flow rate, the third (in the instance of a candle integrated to a cyclone) is to filter off particulate which escaped the previous barrier.
- Reduced bulk with reduced extent of the surfaces to be insulated and, hence, reduced loss of heat content.

At the same time, for the same flow velocity, improved effectiveness of the filtering action is brought about by the centrifugal effect.
- Reduced plant costs, as results from the use of simple component parts from the constructional standpoint compared to filters of another type such as the electrostatic ones and from the flow being split in two with a part at a high dust concentration requiring a reduced filtering apparatus and correspondingly exhaust fans of extremely small power and size.
- Reduced running costs: the greatest head losses produced by the candles only affect 10% of the overall flow rate therefore requiring a proportionally smaller energy consumption by the exhaust fans.
- Optimum energy recovery, thanks to the possibility of utilizing the full flow rate of the cleaned hot gases in exchangers which are less likely to grow deposits of solid particulate which may impair the transfer of heat.

The possibility of disconnecting the secondary flow filtering stage for maintenance operations and of temporarily operating the first filtering stage alone, or of using in parallel a bank of filtering stages in the secondary flow with the possibility of cutting off one of the stages for maintenance and servicing operations without shutting down the whole plant.

Because of these characteristics the filtering system described can be used to advantage in incinerating plants and land-based thermal plants, but may be used with marine engines as well.

The foregoing description only covers a preferred embodiment and a few variations thereof, but it will be appreciated that other variations may be introduced. For example, for a filtering system wherein the candle is integrated to a reverse flow cyclone with swirler, the candle may be connected by an elbow union to the wall of the cyclone, and in the extreme even to the swirler itself, instead of being connected to the dust collecting chamber downstream from the cyclone.

Likewise, the ceramics filter elements, indicated as cylindrical candles closed at one end, may consist of conical elements closed at one end, and in the extreme, of filter plates.

## Claims

1. A system for hot dedusting the flue gases of incinerators and thermal stations, comprising:
an axial cyclone (2,10,12) swept through by the flow of hot flue gas,
a parting loop (13) for dividing the outgoing flue gas flow from said axial cyclone into a primary flow at a low dust concentration and high flow rate and a secondary flow at a high dust concentration and low flow rate, and
a second filtering stage (3,19,45) swept through by said secondary flow to transfer out a dedusted secondary flow.

2. A dedusting system as in Claim 1, comprising a heat exchanger (5) receiving, from said axial cyclone (2,10,12) and said second filtering stage, respectively said primary flow at a low dust concentration and said dedusted secondary flow.

3. A dedusting system as in Claim 1, wherein said second filtering stage (3,19,45) comprises at least one filter element (19,34,45) of a sintered and porous ceramics material.

4. A dedusting system as in Claim 1, wherein said second filtering stage (3,19,45) comprises a second filtering cyclone and at least one filter element (34,45) made of a sintered and porous ceramics material accommodated inside a chamber (32,44) of said second cyclone and forming a third filtering stage for said outgoing secondary flow from said second cyclone (30,40).

5. A system as in Claim 4, wherein said filter element (34,45) is a ceramics candle.

6. A system as in Claim 4, wherein said second cyclone (30) is a reverse flow cyclone with a tangential inlet.

7. A system as in Claim 4, wherein said second cyclone is a reverse flow cyclone with a swirler.

8. A secondary flow filtering assembly for the system of Claim 1, comprising a filtering cyclone (30,40) and at least one filter element (34,45) made of a sintered and porous ceramics material accommodated inside a chamber of said filtering cyclone and forming an escape flowpath for incoming hot flue gas to said filtering cyclone.

9. A filtering assembly as in Claim 8, wherein said filter element (35,45) is a ceramics candle and said filtering cyclone (30,40) is a reverse flow type.
